(19)

Europäisches Patentamt

European Patent Office

Office européen des brevets

(11) Veröffentlichungsnummer: **0 334 082**
**A2**

## (12) EUROPÄISCHE PATENTANMELDUNG

(21) Anmeldenummer: 89103841.6

(22) Anmeldetag: 04.03.89

(51) Int. Cl.⁴: **A23F 5/04 , A23F 5/14**

(30) Priorität: 19.03.88 DE 3809365

(43) Veröffentlichungstag der Anmeldung:
27.09.89 Patentblatt 89/39

(84) Benannte Vertragsstaaten:
AT BE CH DE ES FR GB GR IT LI LU NL SE

(71) Anmelder: **Jacobs Suchard AG**
**Seefeldquai 17**
**CH-8008 Zürich(CH)**

(72) Erfinder: **Kühn, Michael**
**Amalienstrasse 63**
**D-2870 Delmenhorst(DE)**
Erfinder: **Kurtzahn, Frithjof**
**Angelserstrasse 14**
**D-2803 Weyhe/Leeste(DE)**
Erfinder: **Vogt, Siegfried**
**Gaussstrasse 30**
**D-2804 Lilienthal(DE)**

(74) Vertreter: **Bolte, Erich, Dipl.-Ing. et al**
**c/o Meissner, Bolte & Partner Patentanwälte**
**Hollerallee 73**
**D-2800 Bremen 1(DE)**

(54) **Verfahren zum Herstellen von Röstkaffee mit verbesserten organoleptischen Eigenschaften.**

(57) Gegenstand der vorliegenden Erfindung ist ein Verfahren zur Herstellung von Röstkaffee mit verbesserten organoleptischen Eigenschaften, wobei Rohkaffeebohnen in an sich bekannter Weise einem Röstprozeß unterworfen werden und ihnen während des Röstens oder danach Honig und gegebenenfalls Saccharose beigemengt wird.

EP 0 334 082 A2

# Verfahren zum Herstellen von Röstkaffee mit verbesserten organoleptischen Eigenschaften

Die Erfindung betrifft ein Verfahren zum Herstellen von Röstkaffee mit verbesserten organoleptischen Eigenschaften.

Der Geschmack von Röstkaffee und Röstkaffee-Getränken ist wesentlich durch die Auswahl des Rohkaffees bestimmt. Neben der Rohkaffee-Provenienz haben auch Art des Röstens und Röstgrad Auswirkungen auf den Geschmack des Kaffeegetränks.

Bemühungen, das Aroma bzw. den Geschmack von Röstkaffee-Getränken zu verbessern oder zu variieren, konzentrierten sich bisher zum einen auf die Auswahl optimaler Röstverfahren und zum anderen auf die Auswahl von Kaffeesorte bzw. von Mischungen verschiedener Kaffeesorten. Durch die genannten Maßnahmen ist eine Variation des Kaffeearomas in relativ engem Rahmen möglich.

Der Erfindung liegt die Aufgabe zugrunde, ein Verfahren zur Herstellung von Röstkaffee mit verbesserten organoleptischen Eigenschaften, insbesondere mit besonderen, neuartigen geschmacklichen Eigenschaften, herzustellen.

Zur Lösung dieser Aufgabe ist das erfindungsgemäße Verfahren dadurch gekennzeichnet, daß Kaffeebohnen während des Röstprozesses oder unmittelbar danach Honig und gegebenenfalls Saccharose beigemengt wird.

Vor allem durch die Zugabe von Honig wird ein Röstkaffee gewonnen, der qualitativ hochwertig ist und sich durch ein verbessertes Aroma und einen verbesserten Geschmack auszeichnet. In Kaffeegetränken, die mit dem erfindungsgemäß hergestellten Röstkaffee aufgebrüht werden, ist ein voller Kaffeegeschmack durch dezenten Honiggeschmack abgerundet. Im beanspruchten Verfahren hat sich die Zugabe von Honig und gegebenenfalls Saccharose gegen Ende des Röstprozesses als besonders günstig für Aroma, Geschmack und Farbe des Endproduktes erwiesen.

Der Zeitpunkt für die Beimengung von Honig und gegebenenfalls Saccharose kann auch nach Maßgabe eines vorbestimmten Farbwertes der Kaffeebohnen im Röstverfahren festgelegt werden. Der Farbwert der Kaffeebohnen hängt von der Röstzeit ab. Für die Qualität des erfindungsgemäß hergestellten Röstkaffees ist die Konzentration der Zusätze Honig und eventuell Saccharose von großer Bedeutung. Qualitativ hervorragender Röstkaffee wird bei Zusatz von Honig und Saccharose erhalten, wenn Honig in einer Menge von ca. 20 Gew.-% und Saccharose in einer Menge von 10 bis 15 Gew.-%, vorzugsweise 11 Gew.-%, bezogen auf die Rohkaffeemenge, verwendet wird.

Die Verwendung von zusätzlichem Honigaroma zusammen mit Honig verstärkt die Honig-Geschmackskomponente im Röstkaffee. Verfahrenstechnisch von besonderer Bedeutung ist die Maßnahme gemäß Patentanspruch 5. Die Röstkaffeebohnen werden danach aus einer Röstvorrichtung (Rösttrommel) in einen geheizten Intensiv-Mischer übergeführt, in dem die Beimengung von Honig und gegebenenfalls Saccharose stattfindet. Prinzipiell kann die Zugabe von Honig und Zucker auch in der Rösttrommel selbst erfolgen, allerdings muß dann nach jeder Charge die Rösttrommel gereinigt werden.

Der Intensiv-Mischer wird bei einer Temperatur zwischen 120°C und 170°C, vorzugsweise bei 150°C, gefahren. Dabei findet ein gewisses "Nachrösten" der Kaffeebohnen statt und die zugesetzten Zucker karamelisieren teilweise. Nach einer ausreichenden Erhitzungsperiode im Intensiv-Mischer wird der mittelviskose Röstkaffee-Honig-Brei gekühlt. Besonders vorteilhaft ist es, den Röstkaffee-Honig-Brei zur Kühlung aus dem Intensiv-Mischer in einen speziellen Kühler zu überführen, wo die Kühlung unter Rühren schnell durchgeführt wird. Durch gekühlte Flächen und eingeblasene Luft bilden sich hochviskose Kaffee-Honig-Klumpen, die laufende durch ein Rühr- oder Knetwerk im Kühler desintegriert werden müssen. Im Laufe der weiteren Kühlung werden die Klumpen spröde und können durch das Rühr- oder Knetwerk wieder in einzelne dragierte Kaffeebohnen desintegriert werden.

Die dragierten Röstkaffee-Bohnen müssen trocken und kühl gelagert werden. Die Lagerbehälter müssen spezielle Austragsvorrichtungen für schwerfließendes Gut haben.

Das Mahlen der dragierten Röstkaffee-Bohnen wird mit einer speziellen Mühle, deren Walzen Radialriffeln aufweisen, vorgenommen. Diese Mühle ist mit fünf Passagen ausgerüstet, um einen guten Produkteinzug zu erreichen.

Das Mahlprodukt wird trocken und kühl gelagert. Die Lagerbehälter weisen spezielle Austragsvorrichtungen für schwerfließende Güter auf.

Die Verpackung von gemahlenem oder erfindungsgemäßen Röstkaffee erfolgt vorzugsweise in Schlauchbeuteln, um ein Verbacken des Röstkaffees zu verhindern.

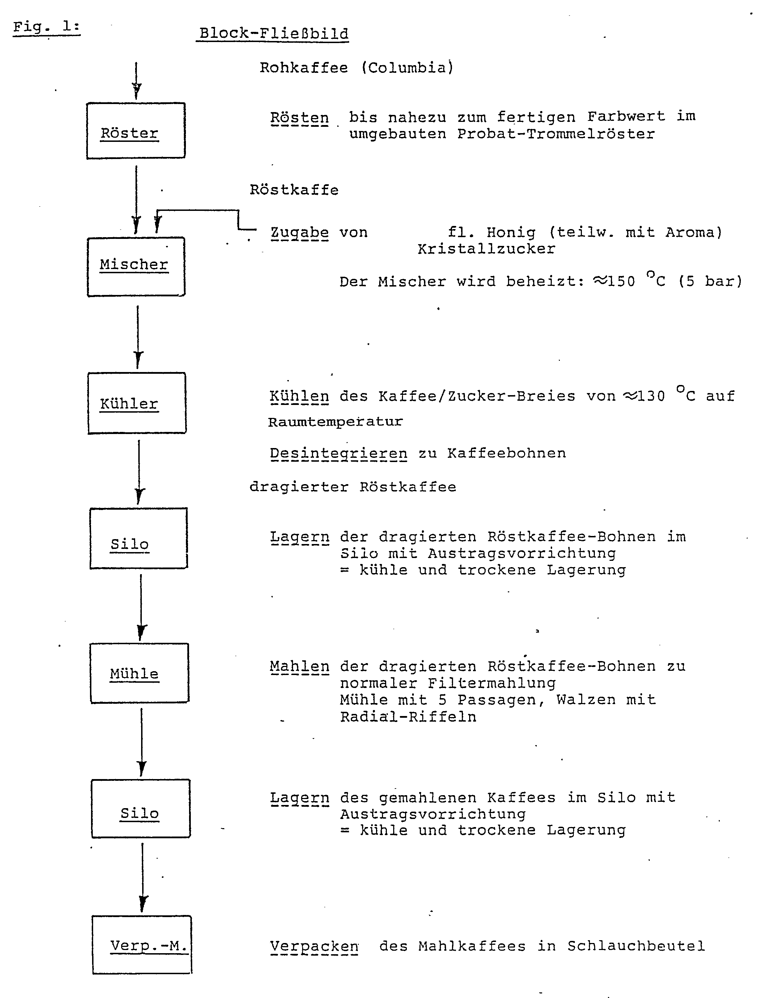

Fig. 1 gibt das erfindungsgemäße Verfahren schematisch in einem Block-Fließbild wieder.

Im folgenden wird das beanspruchte Verfahren anhand von Beispielen näher erläutert:

Beispiel 1

500 g (Columbia-)Rohkaffee werden geröstet, bis der gewünschte Röstgrad nahezu erreicht ist. Dann werden die heißen Röstkaffee-Bohnen in einen Intensiv-Mischer, der auf 150° C geheizt ist, gegeben. Unter Rühren werden zuerst 100 g flüssiger Honig (mit 17,5 % Wasser), dann 55 g Saccharose zugegeben. Nach einer Warmhaltephase von 1 bis 3 min. wird der zähe Röstkaffee-Honig-Brei in einen Kühler geleitet. Unter Rühren wird gekühlt. Dabei bilden sich zähe Klumpen, die bei weiterer Kühlung spröde werden und in dragierte Kaffeebohnen auseinanderfallen.

Die dragierten Kaffeebohnen können zermahlen werden.

Beispiel 2

Es wird wie in Beispiel 1 vorgegangen, allerdings werden dem flüssigen Honig 2,6 g Honigaroma (zum Beispiel von der Firma Haarmann und Reimer) zugegeben, bevor der Honig den Röstkaffee-Bohnen beigemengt wird.

Es wurden umfangreiche Geschmacks-Tests durchgeführt, in denen Kaffeegetränke aus erfindungsgemäßen Röstkaffee beurteilt wurden. So wurden beispielsweise die Produkte, deren Herstellung in Beispiel 1 (= Produkt 1) und Beispiel 2 (= Produkt 2) beschrieben wird, getestet. Die entsprechenden Testergebnisse, die einmal auf "professionelle" Tester zurückgehen und zum anderen auf Konsumenten sind nachfolgend aufgeführt.

Produkt 1:

Probenküche (Tester):

mit einem exklusiven Geschmack aus einer Verbindung von Kaffee und Honig

Konsumentenbeschreibung:

- abgerundeter, milder Kaffeegeschmack
- leicht und bekömmlich
- angenehmes Kaffeearoma, dezenter Honiggeschmack

Produkt 2:

Probenküche (Tester):

wie Produkt 1, aber mit einem zusätzlich würzigen (honigkuchenartigen) Geschmack

Konsumentenbeschreibung:

- völlig neuartiger, ganz anderer aromatischer Kaffee
- ausgeprägter Honiggeschmack/aroma
- süßlicher Beigeschmack

Diese Ergebnisse zeigen, daß mit dem beanspruchten Verfahren ein Röstkaffee mit einem neuartigen abgerundeten Geschmack hergestellt wird, der qualitativ hochwertig einzuordnen ist. Darüber hinaus erlaubt das Verfahren durch Variation verschiedener Verfahrensparameter, wie z.B. Röstgrad, Warmhaltezeit im Intensiv-Mischer, Konzentration von Honig bzw. Saccharose, die organoleptischen Eigenschaften des Röstkaffees zu beeinflussen.

Ansprüche

1. Verfahren zum Herstellen von Röstkaffee mit verbesserten organoleptischen Eigenschaften, bei dem Rohkaffee-Bohnen in an sich bekannter Weise einem Röstprozeß unterworfen werden, **dadurch gekennzeichnet**, daß den Kaffeebohnen Honig und gegebenenfalls Saccharose während des Röstprozesses oder unmittelbar danach beigemengt werden.

2. Verfahren nach Anspruch 1, dadurch gekennzeichnet, daß die Beimengung von Honig und gegebenenfalls Saccharose gegen Ende des Röstprozesses erfolgt.

3. Verfahren nach Anspruch 1, dadurch gekennzeichnet, daß die Beimengung von Honig und gegebenenfalls Saccharose in Abhängigkeit vom Erreichen eines vorbestimmten Farbwertes der Kaffeebohnen im Röstprozeß erfolgt.

4. Verfahren nach Anspruch 1 sowie einem oder mehreren der weiteren Ansprüche, dadurch gekennzeichnet, daß Honig und gegebenenfalls Saccharose den Kaffeebohnen unmittelbar im Anschluß an den Röstprozeß bei noch erwärmten Kaffeebohnen beigemengt werden, insbesondere während einer Phase des Nachröstens bei einer Temparatur zwischen 110° C und 170° C, insbesondere bei 150° C.

5. Verfahren nach einem oder mehreren der vorhergehenden Ansprüche, dadurch gekennzeichnet, daß Honig in einer Menge von 20 Gew.-% und gegebenenfalls Saccharose in einer Menge von 10 bis 15 Gew.-%, vorzugsweise 11 Gew.-%, bezogen auf die Rohkaffeemenge, zugegeben wird.

6. Verfahren nach einem oder mehreren der vorhergehenden Ansprüche, dadurch gekennzeichnet, daß die Kaffeebohnen vor dem Beimengung von Honig und gegebenenfalls Saccharose in einen geheizten Intensivmischer übergeführt werden.

7. Verfahren nach Anspruch 6, dadurch gekennzeichnet, daß die mit Honig gegebenenfalls Saccharose versetzten Kaffeebohnen im Intensivmischer während einer vorbestimmten Warmhaltephase auf einer Temperatur zwischen 110°C und 150°C gehalten werden.

8. Verfahren nach einem oder mehreren der vorhergehenden Ansprüche, dadurch gekennzeichnet, daß das Gemisch aus Kaffeebohnen, Honig und gegebenenfalls Saccharose nach einer ausreichenden Warmhaltephase unter Rühren gekühlt wird.

9. Röstkaffee, hergestellt nach dem Verfahren gemäß einem oder mehreren der Ansprüche 1 bis 8, gekennzeichnet durch Honigaroma als Geschmackskomponente.

Fig. 1:                    Block-Fließbild

                          Rohkaffee (Columbia)

┌──────────┐
│  Röster  │     Rösten  bis nahezu zum fertigen Farbwert im
└──────────┘             umgebauten Probat-Trommelröster

                Röstkaffe

┌──────────┐     Zugabe von        fl. Honig (teilw. mit Aroma)
│ Mischer  │                       Kristallzucker
└──────────┘
                Der Mischer wird beheizt: ≈150 $^{o}$C (5 bar)

┌──────────┐
│  Kühler  │     Kühlen des Kaffee/Zucker-Breies von ≈130 $^{o}$C auf
└──────────┘
                Raumtemperatur

                Desintegrieren zu Kaffeebohnen

                dragierter Röstkaffee

┌──────────┐
│  Silo    │     Lagern der dragierten Röstkaffee-Bohnen im
└──────────┘             Silo mit Austragsvorrichtung
                         = kühle und trockene Lagerung

┌──────────┐
│  Mühle   │     Mahlen der dragierten Röstkaffee-Bohnen zu
└──────────┘             normaler Filtermahlung
                         Mühle mit 5 Passagen, Walzen mit
                         Radial-Riffeln

┌──────────┐
│  Silo    │     Lagern des gemahlenen Kaffees im Silo mit
└──────────┘             Austragsvorrichtung
                         = kühle und trockene Lagerung

┌──────────┐
│ Verp.-M. │     Verpacken  des Mahlkaffees in Schlauchbeutel
└──────────┘